# EUROPEAN PATENT APPLICATION

(11) **EP 3 021 021 A1**
(43) Date of publication of application: **18.05.2016**
(21) Application number: 14823272.1
(22) Date of filing: 07.07.2014
(51) Int. Cl.: F16K 31/06

(54) **SOLENOID-CONTROLLED VALVE**

(30) Priority: 12.07.2013 JP 2013146031; 29.11.2013 JP 2013247457
(71) Applicant: Kabushiki Kaisha Saginomiya Seisakusho, Tokyo 165-8907 (JP)
(72) Inventor: OKAWARA, Ichiro, Sayama-shi Saitama 350-1395 (JP)
(74) Representative: Petraz, Gilberto Luigi
(86) International application number: PCT/JP2014/068042
(87) International publication number: WO 2015/005278

(57) **Abstract**

An object is to decrease the length of a valve housing (1), to reduce a pressure loss at a second port (21), and to prevent a valve member (3') from swinging in a pressure balance type of electromagnetic control valve in which the influence of the difference in pressure between a first port (11) and the second port (21) which is exerted upon a valve body (31) is cancelled so that the opening of the valve body (31) varies in a proportional manner. An electromagnetically-driving section (5), an adjusting spring (83) (setting adjustment section (8)), a pressure equalizing chamber (13), and a diaphragm 4 (pressure sensing section) are disposed opposite a valve port (22) on an axis line L of the valve port (22) with the valve body (31) therebetween. The valve body (31), and an aperture (31a), a vertical path (32a), and a lateral path 32b in the valve member 3 (pressure equalizing path) ensure electrical continuity between the valve port (22) and the pressure equalizing chamber (13). The valve port (22) is coaxial with the second port (21) . A tapered surface (33d) is formed in the lower end portion of the valve body (33), and a helical compression spring (15) causes a sliding surface (14b) of a spring holding member (14) which has a spherical shape to abut on the tapered surface (33d).

## Description

### Technical Field

The present invention relates to an electromagnetic control valve, and relates to a pressure balance type of electromagnetic control valve in which an electromagnetic force generated by the feeding of current to an electromagnetically-driving section is balanced against a spring force of an adjusting spring which counteracts the electromagnetic force and an influence of the pressure difference between the pressures at first and second ports which is exerted upon a valve body is cancelled so that the opening of the valve body varies in a proportional manner.

### Background Art

An example of conventional electromagnetic control valves of this type has been disclosed in JP 2011-169415 A (Patent Literature 1). Fig. 5 is a view schematically illustrating the electromagnetic control valve in Patent Literature 1. In this conventional electromagnetic control valve, a valve bar 2 0 having a valve body 20a is disposed inside a valve housing 10. This valve bar 20 is displaced in the directions along an axis line L due to an electromagnetic force generated by the feeding of current to a magnet coil 30a in an electromagnetically-driving section 30. Displacing the valve bar 20 in this manner causes the valve body 20a to adjust the opening at a valve port 40.

The electromagnetic force from the electromagnetically-driving section 30 is balanced against the spring force of an adjusting spring 50. The pressure difference between a pressure equalizing chamber 60 that communicates with a primary port 10a and a secondary port 10b generates a force, which is transmitted to the valve body 20a through a diaphragm 70 (pressure sensing section). The force from the diaphragm 70 cancels the force that is applied to the valve body 20a due to the pressure difference between the primary port 10a and the secondary port 10b. In this way, the influence of the force applied to the valve body 20a due to the pressure difference is removed so that the opening of the valve port 40 varies in a proportional manner with a small amount of feeding current.

### Citation List

### Patent Literature

Patent Literature 1: JP 2011-169415 A

### Summary of Invention

### Technical Problem

In the above conventional electromagnetic control valve, a pressure equalizing path 80 through which the pressure equalizing chamber 60 communicates with the primary port 10a is formed in a main housing (not illustrated) disposed on the periphery of the electromagnetic control valve. This may be problematic in that the design of the main housing is complex. Furthermore, the diaphragm 70 that acts as a pressure sensing section and a pressure introducing section 90 in which a fluid pressure is introduced from the pressure equalizing chamber 60 to the diaphragm 70 are disposed opposite the electromagnetically-driving section 30 with the valve body 20a therebetween. Thus, the valve housing 10 may increase in length in a direction along the axis line L, making it difficult to downsize the electromagnetic control valve itself.

Since the diaphragm 70 (pressure sensing section) is disposed below the secondary port 10b (valve housing 10), the valve port 40 is configured to intersect the secondary port 10b. At the intersection of the valve port 40 and the secondary port 10b, a pressure loss may occur. This might create a problem in that the flow of a flow rate is inhibited.

An object of the present invention is to provide a pressure balance type of electromagnetic control valve in which: an electromagnetic force from an electromagnetically-driving section is balanced against a spring force of an adjusting spring; an influence of the difference in pressure between first and second ports which is exerted on a valve body is cancelled so that the opening of the valve body varies in a proportional manner; and a valve housing is shortened to downsize the electromagnetic control valve itself. In addition, another object is to decrease a pressure loss at the second port.

### Solution to Problem

An electromagnetic control valve in a first aspect is an electromagnetic control valve including: a valve chamber and a valve port formed between a first port and a second port; and an electromagnetically-driving section driving a valve body in the valve chamber to open or close the valve port, wherein a force applied to the valve body due to a difference in pressure between the first port and the second port is cancelled by a force applied to the valve body due to a difference in pressure between the valve chamber and a pressure equalizing chamber which is added to a pressure sensing section, an opening of the valve port varies in a proportional manner, depending on a balance between an electromagnetic force from the electromagnetically-driving section and a spring force of an adjusting spring, the electromagnetically-driving section, the adjusting spring, the pressure equalizing chamber, and the pressure sensing section are disposed opposite the valve port on an axis line of the valve port with the valve body therebetween, andapressure equalizingpath that ensures electrical continuity between the valve port and the pressure equalizing chamber is formed in a valve member having the valve body.

The electromagnetic control valve in a second aspect is the electromagnetic control valve in the first aspect, wherein the pressure sensing section is a flexible diaphragm that is disposed between the valve chamber and the pressure equalizing chamber and that is connected to the valve body.

The electromagnetic control valve in a third aspect is the electromagnetic control valve in the first or second aspect, wherein the electromagnetically-driving section includes: an attracting element that generates an electromagnetic force from feeding of current to a magnet coil; and an electromagnetically movable section that opposes the attracting element in a case and that is movable in an axial direction of the case with the electromagnetic force, the valve member has a connecting section that is disposed and extends from the valve body toward the electromagnetically-driving section, the adjusting spring is disposed in the attracting element, an end portion of the connecting section passes through centers of the electromagnetically movable section and the attracting element and is connected to the adjusting spring, and a helical compression spring that biases the valve body toward a valve-opening side is disposed in the valve port.

The electromagnetic control valve in a fourth aspect is the electromagnetic control valve in the third aspect, wherein a concave surface centered on the axis line is formed on a side of the valve body which faces the valve port, a spring holding member is disposed at an end portion of the helical compression spring which faces the valve body, and the spring holding member has a sliding surface that abuts on the concave surface of the valve body.

The electromagnetic control valve in a fifth aspect is the electromagnetic control valve in the fourth aspect, wherein the concave surface of the valve body is a tapered surface having a mortar shape centered on the axis line, and the sliding surface of the spring holding member which has a spherical shape abuts on the tapered surface.

### Advantageous Effects of Invention

According to an electromagnetic control valve in the first aspect, a pressure equalizing path is formed in a valve body that makes a valve port communicate with a pressure equalizing chamber. In the pressure equalizing path, an electromagnetically-driving section, an adjusting spring, a pressure equalizing chamber, and a pressure sensing section are disposed opposite the valve port on the axis line of the valve port with the valve body therebetween. Thus, the configuration in which only a second port is disposed below the valve port is achieved. This configuration makes it possible to decrease the length of a valve housing in a direction along the axis line, that is, to downsize the electromagnetic control valve itself. Since the second port can communicate with the valve port while being coaxial with the valve port, the pressure loss at the second port can be decreased.

According to an electromagnetic control valve in the second aspect, in addition to the effect of the first aspect, the pressure sensing section is a diaphragm disposed between the valve chamber and the pressure equalizing chamber. Therefore, it is possible to ensure the airtightness between the valve chamber and the pressure equalizing chamber.

According to an electromagnetic control valve in the third aspect, in addition to the effect of the first or second aspect, a helical compression spring can keep positioning the lower end of the valve body on the axis line with the biasing force, thereby reducing swinging of a valve member on the axis line. It is thus possible to prevent damage to, for example, a connection part between an adjusting spring and an end portion of a connecting section of the valve member.

According to an electromagnetic control valve in the fourth aspect, in addition to the effect of the third aspect, a concave surface of the valve body and a sliding surface of a spring holding member produce a centripetal effect, which positions more precisely the lower end of the valve body on the axis line. Therefore, even if the helical compression spring is deformed asymmetrically, the position of the lower end of the valve body 33 can be kept on the axis line L. This can further reduce swinging of the valve member on the axis line L.

According to an electromagnetic control valve of the fifth aspect, in addition to the effect of the fourth aspect, a tapered surface of the valve body and a sliding surface of the spring holding member which has a spherical shape further enhance the centripetal effect. The tapered surface helps produce the centripetal effect.

### Brief Description of Drawings

Fig. 1 is a longitudinal sectional view of an electromagnetic control valve in a first embodiment of the present invention.
Fig. 2 is a longitudinal sectional view of an electromagnetic control valve in a second embodiment of the present invention.
Fig. 3 is a view illustrating an exemplary system that employs an electromagnetic control valve in an embodiment.
Fig. 4 is a view illustrating the characteristics of the current vs P2 and flow rate of the electromagnetic control valve in the embodiment.

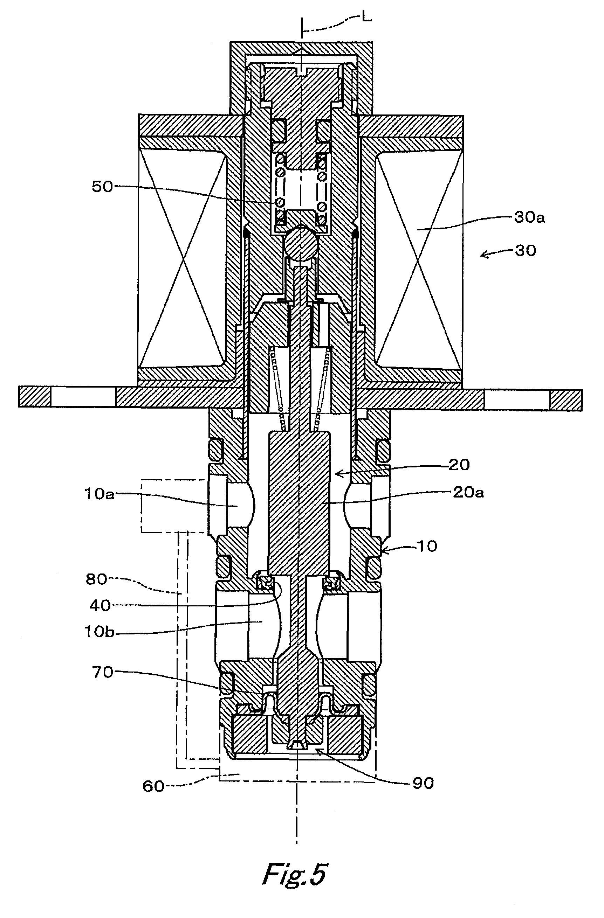

Fig. 5 is a view schematically illustrating a conventional electromagnetic control valve.

### Description of Embodiments

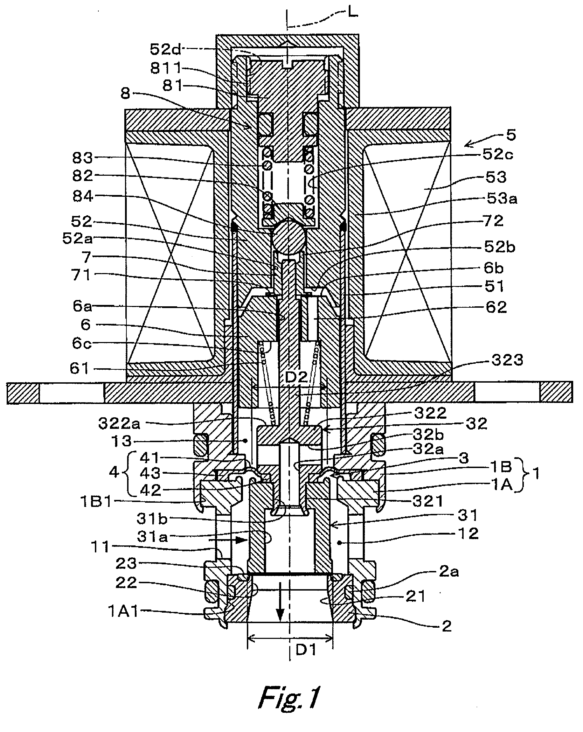

Next, some embodiments of the present invention will be described. Fig. 1 is a longitudinal sectional view of an electromagnetic control valve in a first embodiment in a closed state. The electromagnetic control valve in this embodiment has a valve housing 1 including a lower main body 1A and an upper main body 1B. The lower main body 1A fits into a fitting hole 1B1 formed in the upper main body 1B at its lower location. By swaging the sides of the aperture of the fitting hole 1B1, the lower main body 1A is fixed firmly and integrally to the upper main body 1B.

The lower main body 1A includes a first port 11 and a valve chamber 12; the first port 11 is disposed on a high pressure side and a fluid flows into the first port 11 as indicated by the arrow, and the valve chamber 12 communicates with the first port 11. In the lower main body 1A, a seat fitting hole 1A1 is formed in the valve chamber 12 at its lower location, and a seat member 2 fits into this seat fitting hole 1A1. By swaging the side of the aperture of the seat fitting hole 1A1, the seat member 2 is fixed firmly and integrally to the lower main body 1A. The interface between the seat member 2 and the seat fitting hole 1A1 is sealed with an O-ring 2a. A pressure equalizing chamber 13 is created in the upper main body 1B, and a plunger case 51 of an electromagnetically-driving section 5 (described later) fits into and is firmly fixed to the inner side of this pressure equalizing chamber 13.

In the seat member 2, a second port 21 and valve port 22 are formed; the second port 21 is disposed on a low pressure side and the fluid flows out from the second port 21 as indicated by the arrow, and the second port 21 communicates with the valve chamber 12 through the valve port 22. The valve port 22 has a circular lateral cross section centered on the axis line L, and a sealing member 23 having a ring shape is disposed around the aperture in the valve port 22 which faces the valve chamber 12.

A valve member 3 that is displaceable in the directions along the axis line L extends inside both the valve chamber 12 and the pressure equalizing chamber 13. The valve member 3 includes a valve body 31 and a connecting section 32. The valve body 31 that has a cylindrical shape is positioned inside the valve chamber 12 and can contact or be separated from the sealing member 23 of the seat member 2. The connecting section 32 is disposed and extends above the valve body 31. The connecting section 32 includes a connecting shaft 321, a boss section 322, and a connection rod 323. The connecting shaft 321 is connected at its lower end to the valve body 31. The boss section 322 has a larger diameter than the connecting shaft 321 and is positioned inside the pressure equalizing chamber 13. The connection rod 323 is disposed and extends above the boss section 322.

A diaphragm 4, made of rubber, has a substantially disc shape and is disposed between the valve body 31 and the boss section 322. The diaphragm 4 includes: a convolution section 41; an inner ring section 42 disposed on the inner side of the convolution section 41; and an outer ring section 43 disposed on the outer side of the convolution section 41. The valve body 31 includes, at its center, an aperture 31a having a cylindrical shape and a connection hole 31b. The connecting shaft 321 of the connecting section 32 passes through the aperture in the inner ring section 42 of the diaphragm 4 and fits into the connection hole 31b in the valve body 31. Both the valve body 31 and the boss section 322 press the inner ring section 42 to swage the lower end portion of the connecting shaft 321, so that the valve body 31, the diaphragm 4, and the connecting section 32 are fixed integrally to one another. The outer ring section 43 of the diaphragm 4 is held so as to be pressed between the upper end of the lower main body 1A and the lower end portion of the pressure equalizing chamber 13 of the of the upper main body 1B in which the aperture is formed. In this case, the upper end of the valve body 31 (below the valve member 3) is usually positioned on the axis line L due to the automatic centripetal effect produced by the restoring force that the diaphragm 4 generates when receiving a pressure.

A vertical path 32a that extends from the aperture 31a in the valve body 31 in a direction of the axis line L is formed in the connecting shaft 321 and the boss section 322 of the connecting section 32. A lateral path 32b that is opened in the pressure equalizing chamber 13 and intersects the vertical path 32a is formed in the boss section 322. The vertical path 32a, the lateral path 32b, and the aperture 31a in the valve body 31 configure a "pressure equalizing path". The valve port 22 communicates with the pressure equalizing chamber 13 through the aperture 31a, the vertical path 32a, and the lateral path 32b. The diaphragm 4 has flexibility and configures a "pressure sensing section" that transmits a force generated due to a pressure difference to the valve member 3 (valve body 31). The pressure difference is a difference between a pressure (P1) at the first port 11 and a pressure (P2) at the second port 21; the pressure (P1) is a pressure applied to the side of the diaphragm 4 which faces the valve chamber 12, and the pressure (P2) is a pressure applied to the side of the diaphragm 4 which faces the pressure equalizing chamber 13. The diaphragm 4 hermetically separates the pressure equalizing chamber 13 from the valve chamber 12.

The electromagnetically-driving section 5 is disposed above the valve housing 1. The electromagnetically-driving section 5 includes the plunger case 51, an attracting element 52, and a magnet coil 53. The plunger case 51 has a cylindrical shape. The attracting element 52 is made of a magnetic body fixed to the upper end of the plunger case 51. The magnet coil 53 is a wire wound around a bobbin 53a disposed on the outer circumference of the plunger case 51. Specifically, the plunger case 51 is fixed to the attracting element 52 by means of welding, for example. A plunger 6 that configures an "electromagnetically movable section" is disposed inside the plunger case 51, and a plunger spring 61 is disposed between the plunger 6 and the boss section 322. The plunger 6 is formed of a magnetic body and is rotationally symmetric with respect to the axis line L except an air hole 62 of the plunger 6. Insertion through-holes 52a and 6a that are coaxial with the axis line L are formed, respectively, in the attracting element 52 and the plunger 6. A connection rod 323 of the valve member 3 is inserted into the insertion through-hole 6a in the plunger 6, and a retaining member 7 that is formed of a nonmagnetic body and has a cylindrical shape is attached to an end portion of the connection rod 323 inside the insertion through-hole 52a in the attracting element 52. The retaining member 7 is firmly fixed to the end portion of the connection rod 323 by means of welding. The retaining member 7 has a flange section 71 at its end portion closer to the plunger 6. This flange section 71 is positioned between an opposing surface 6b of the plunger 6 which faces the attracting element 52 and an opposing surface 52b of the attracting element 52 which faces the plunger 6 while being in contact with the opposing surface 6b.

A plunger spring 61 is disposed in a compressed state with its first end contacting an inner-side bottom surface 6c of the plunger 6 and its second end contacting a spring holding section 322a; the spring holding section 322a is the end surface of the boss section 322 which faces the plunger 6. Thus, the opposing surface 6b of the plunger 6 is always in contact with the retaining member 7 (its flange section 71). When the plunger 6 is attracted toward the attracting element 52, the valve member 3 is displaced together with the plunger 6 along the direction in which the valve is opened. The clearance between the insertion through-hole 6a in the plunger 6 and the connection rod 323 of the valve member 3 is set to be larger than the clearance between the plunger 6 and the plunger case 51. Therefore, when the plunger 6 is displaced in a direction orthogonal to the axis line L, the plunger 6 does not contact the valve member 3.

An adjustment section hole 52c whose diameter is larger than the diameter of the insertion through-hole 52a is formed in the attracting element 52. A setting adjustment section 8 is disposed inside the adjustment section hole 52c. The setting adjustment section 8 includes an adjusting screw 81, a spring holder 82, an adjusting spring 83, and a ball 84. The adjusting spring 83 is disposed in a compressed state between the adjusting screw 81 and the spring holder 82. The ball 84 is disposed inside the insertion through-hole 52a in the attracting element 52 while abutting on the spring holder 82. The adjusting spring 83 biases the ball 84 through the spring holder 82 so that the ball 84 abuts on the upper end of the retaining member 7. A male thread section 811 on the outer circumference of the adjusting screw 81 is screwed into a female thread section 52d formed in the upper portion of the inner circumferential surface of the attracting element 52. As a result, the adjusting screw 81 is attached to the attracting element 52.

A small clearance is created between the ball 84 and the insertion through-hole 52a in the attracting element 52. The ball 84 is thereby displaceable inside the insertion through-hole 52a along the axis line L. A cylinder section 72 that has a cylindrical shape with a small thickness is formed in the end portion of the retaining member 7 which faces the ball 84. The cylinder section 72 is in spherical surface contact with the ball 84. The upper end of the retaining member 7 (and the upper end of the valve member 3) is thereby always positioned on the axis line L.

Feeding current to the magnet coil 53 in the electromagnetically-driving section 5 creates a magnetic circuit that generates a magnetic attractive force between the attracting element 52 and the plunger 6. This attractive force conforms to the current fed to the magnet coil 53.

The above configuration allows the electromagnetic control valve in the embodiment to behave in the following manner. The adjusting spring 83 of the setting adjustment section 8 biases the valve member 3 toward the sealing member 23 of the seat member 2 through the spring holder 82, the ball 84, and the retaining member 7. Exciting the magnet coil 53 causes the attracting element 52 to attract the plunger 6. Then, the valve member 3 is displaced away from the sealing member 23 against the biasing force of the adjusting spring 83. As a result, the valve transits from a closed state to an opened state, and the opening of the valve port 22 is controlled depending on the positional relationship along the axis line L between the valve body 31 and the sealing member 23. When the plunger 6 is positioned at the uppermost location whereby the valve opening is fully opened, the flange section 71 of the retaining member 7 abuts on the opposing surface 52b of the attracting element 52. In this case, the flange section 71 serves as a stopper, thereby preventing the plunger 6 from being attracted to (contacting) the attracting element 52.

Stop exciting the magnet coil 53 causes the valve body 31 to sit on the sealing member 23 so that the valve is closed. In this case, the biasing force that the adjusting spring 83 adds to the valve member 3 can be controlled depending on the insertion amount of the adjusting screw 81. Thus, the electromagnetic force (attractive force) required to open the valve can be adjusted. In short, the valve member 3 is displaced in the directions along the axis line L depending on the balance relation between the electromagnetic force generated by the magnet coil 53 and the spring force of the adjusting spring 83. The valve body 31 thereby varies the opening of the valve port 22.

As described above, the pressure difference between the pressure in the valve chamber 12 and the pressure at the second port 21 acts on the valve body 31, so that a force is added to the valve body 31 along the direction in which the valve is closed. In addition, the pressure difference between the pressure at the second port 21 applied to the pressure equalizing chamber 13 and the pressure in the valve chamber 12 acts on the diaphragm 4. This is because the pressure equalizing chamber 13 communicates with both the valve port 22 and the second port 21 through the vertical path 32a, the lateral path 32b, and the aperture 31a (pressure equalizing path). As a result, a force is added to the valve member 3 along the direction in which the valve is opened. In this case, an effective pressure reception diameter D1 of the valve body 31 (the inner diameter of the sealing member 23 in this example) is equal to an effective pressure reception diameter D2 of the diaphragm 4 when the valve is closed by the valve body 31 sitting on the sealing member 23. Therefore, the forces added to valve member 3 due to the pressure difference are mutually cancelled. Consequently, when moving away from the sealing member 23, the valve body 31 does not undergo an influence of the pressure difference.

As described above, an electromagnetic force according to a feeding current in the electromagnetically-driving section 5 is balanced against the spring force of the adjusting spring 83. In addition, a force that is generated due to the difference between the pressures at the first port 11 and the second port 21 and applied to the valve body 31 is cancelled by a force that the diaphragm 4 (pressure sensing section) operating in accordance with a pressure in the pressure equalizing chamber 13 applies to the valve body 31. The influence of the force applied to the valve body 31 due to the pressure difference is thereby removed. It is thus possible to vary the opening of the valve port 22 in a proportional manner with a small amount of feeding current.

The electromagnetically-driving section 5, the adjusting spring 83, the pressure equalizing chamber 13, and the diaphragm 4 (pressure sensing section) are disposed opposite the valve port 22 on the axis line L of the valve port 22 with respect to the valve body 31 therebetween. Furthermore, the pressure equalizing chamber 13 shares its internal space with the plunger case 51 in the electromagnetically-driving section 5. In this configuration, only the second port 21 is disposed below the valve port 22. Therefore, it is possible to decrease the length of the valve housing 1 in a direction along the axis line L, downsizing the electromagnetic control valve itself. Since the second port 21 is coaxial and communicates with the valve port 22, namely, both the second port 21 and the valve port 22 are coaxial with the axis line L, the pressure loss at the second port 21 decreases, so a fluid can flow smoothly.

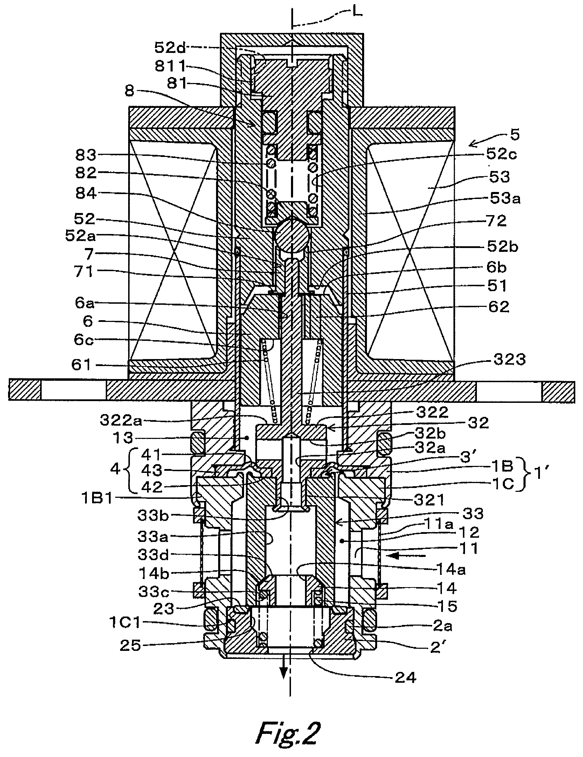

Fig. 2 is a longitudinal sectional view of an electromagnetic control valve in a second embodiment in a closed state. The identical characters are given to the same members and components as those in the first embodiment, and duplicated descriptions will be skipped. In the second embodiment, a valve housing 1' includes a lower main body 1C and an upper main body 1B, and the lower main body 1C is slightly longer than the lower main body 1A in the first embodiment. The lower main body 1C fits into a fitting hole 1B1 formed in the upper main body 1B at its lower location. By swaging the sides of the aperture of the fitting hole 1B1, the lower main body 1C is fixed firmly and integrally to the upper main body 1B.

A first port 11 and a valve chamber 12 are formed in the lower main body 1C. The first port 11 is disposed on a high pressure side, and a fluid flows into the first port 11 as indicated by the arrow; the valve chamber 12 communicates with the first port 11. A filter 11a formed of a metallic mesh is attached to the outer circumference of the first port 11. Alternatively, for example, a porous body can be used as the filter 11a. A seat fitting hole 1C1 is formed in the lower main body 1C below the valve chamber 12, and a seat member 2' fits into this seat fitting hole 1C1. By swaging the sides of the aperture of the seat fitting hole 1C1, the lower main body 1C is fixed firmly and integrally to the seat member 2'.

A second port 24 and a valve port 25 are formed in the seat member 2'. The second port 24 is disposed on a low pressure side, and a fluid flows out from the second port 24 as indicated by the arrow; the valve port 25 makes the secondport 24 communicate with the valve chamber 12. The valve port 25 has a circular lateral cross section centered on the axis line L, and a sealing member 23 having a ring shape is disposed around the aperture in the valve port 25 which faces the valve chamber 12, similar to the first embodiment.

A valve member 3' that is displaceable in the directions along the axis line L extends inside both the valve chamber 12 and a pressure equalizing chamber 13. The valve member 3' includes a valve body 33 and a connecting section 32. The valve body 33 that has a cylindrical shape is positioned inside the valve chamber 12 and can contact or be separated from the sealing member 23 of the seat member 2. The connecting section 32 is the same as that in the first embodiment. The valve body 33 includes, at its center, an aperture 33a having a cylindrical shape and a connection hole 33b. A connecting shaft 321 of the connecting section 32 passes through the aperture in an inner ring section 42 of a diaphragm 4 and fits into the connection hole 33b in the valve body 33. By swaging the lower end portion of the connecting shaft 321, the valve body 33 is fixed integrally to both the diaphragm 4 and the connecting section 32.

A spring hole 33c whose diameter is larger than the diameter of the aperture 33a is formed in the end portion of the aperture 33a in the valve body 33 which faces the seat member 2'. A tapered surface 33d (concave surface) is formed into a cone shape between the aperture 33a and the spring hole 33c while being centered at the axis line L and opened toward the valve port 25. A spring holding member 14 that has a through-hole 14a at the center is disposed in the spring hole 33c, and the surface of this spring holding member 14 which faces the valve body 33 is a sliding surface 14b having a spherical shape. A helical compression spring 15 is disposed at the valve port 25 of the seat member 2'. This helical compression spring 15 is disposed in a compressed state between a flange part around the second port 24 and the spring holding member 14. The biasing force of the helical compression spring 15 causes the sliding surface 14b of the spring holding member 14 which has a spherical shape to abut on the tapered surface 33d of the valve body 33. Herein, the vertical path 32a, the lateral path 32b, the aperture 33a in the valve body 33, and the through-hole 14a in the spring holding member 14 configure a "pressure equalizing path". The valve port 25 communicates with the pressure equalizing chamber 13 through this pressure equalizing path.

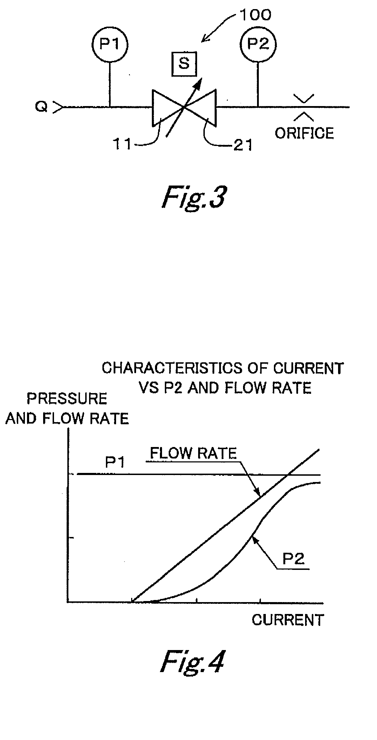

As illustrated in Fig. 3, an electromagnetic control valve 100 in an embodiment may be applied to a system that has an orifice on the second port 21 side. In this case, when a fluid flows from a first port 11 to a second port 21 at a high flow rate, the pressure P2 at the second port 21 increases. As illustrated in Fig. 4, for example, as an increased amount of current is fed to a magnet coil 53, a fluid flows to the second port 21 at a higher flow rate. With this, a pressure P2 increases, and the pressure difference between a pressure P2 and a pressure P1 at the first port 11 decreases.

The pressure difference between the pressures P1 and P2 acts to expand a convolution section 41 of the diaphragm 4. Therefore, when the pressure difference increases, the convolution section 41 is strained and thus generates a strong restoring force. Further, a diaphragm 4 exerts a significant automatic centripetal effect on a valve body 31. When the pressure difference decreases, the automatic centripetal effect of the diaphragm 4 is less prominent. In addition, when the flow rate increases, a lateral force with respect to the axis line L which is generated by the collision of the fluid flowing from the first port 11 with the valve body 31 also increases. Furthermore, as described above, a cylinder section 72 of a retaining member 7 is in spherical surface contact with a ball 84. Therefore, the upper end of the retaining member 7 (and the upper end of a valve member 3 or 3') is always positioned on the axis line L. This may make the valve member 3 (3') more likely to swing. When the valve member 3 (3') swings, for example, a force is added to the welded part of the retaining member 7 and the end portion of a connection rod 323 along a direction in which the retaining member 7 is displaced away from the end portion of a connection rod 323. Eventually, this welded part may be damaged.

With the second embodiment, however, the lower end portion of the valve body 33 is always positioned along the axis line L, thanks to the biasing force of the helical compression spring 15 disposed in the lower end portion of the valve body 33. This can reduce the swinging of the valve member 3' on the axis line L, thereby, for example, preventing damage to the welded part of the retaining member 7 and the end portion of the connection rod 323 (i.e., the connection part between the end of the connecting section of the valve member and the adjusting spring).

The centripetal effect produced by the tapered surface 33d of the valve body 33 and the sliding surface 14b of the spring holding member 14 allows the lower end of the valve body 33 to be positioned more preciously on the axis line L. Moreover, the sliding surface 14b of the spring holding member 14 which has a spherical shape is pressed against the tapered surface 33d having a mortar shape. Therefore, even if the helical compression spring 15 is deformed asymmetrically with respect to the axis line L, for example, the position of the lower end of the valve body 33 is kept on the axis line L. This can further reduce the swinging of valve member 3' on the axis line L.

In the embodiment described above, the tapered surface 33d of a mortar shape is used as the concave surface of the valve body 33; however, the concave surface of the valve body 33 may be a spherical surface of a mortar shape centered on the axis line L. In this case, needless to say, the radius of curvature (absolute value) of the spherical surface having a mortar shape is set to be equal to or more than the radius of curvature (absolute value) of the sliding surface 14b of the spring holding member 14 which has a spherical shape.

In the foregoing embodiments, the pressure equalizing chamber 13 is separated from the valve chamber 12 by the diaphragm 4; however, instead of this diaphragm 4, a sealing member may be disposed between the upper circumference of the valve body 31 and the inner circumferential surface of the upper portion of the valve chamber 12. In this case, the "pressure sensing section" corresponds to the upper surface portions of the valve body 31 and a boss section 322.

The spring load on the helical compression spring 15 is preferably set to be more than a force in a lateral direction with respect to the axis line L which is generated by a collision of a fluid flowing from the first port 11 with the valve body 31 when the flow rate increases, as described above.

In the embodiments described above, a fluid flows into the first port 11 and flows out from the second port 21; however, the configuration in the embodiment is also applicable to a case where a fluid flows in the opposite direction. More specifically, the configurations in the embodiments are applicable to a case where a fluid flows into the second port 21 and flows out from the first port 11. In this case, obviously the second port 21 corresponds to a first port in the claims and the first port 11 corresponds to a second port in the claims.

### Reference Signs List

- 1: valve housing
- 11: first port
- 12: valve chamber
- 13: pressure equalizing chamber
- 2: seat member
- 21: second port
- 22: valve port
- 23: sealing member
- 3: valve member
- 31: valve body
- 31a: aperture (pressure equalizing path)
- 32: connecting section
- 32a: vertical path (pressure equalizing path)
- 32b: lateral path (pressure equalizing path)
- 321: connecting shaft
- 322: boss section
- 323: connection rod
- 4: diaphragm
- 5: electromagnetically-driving section
- 51: plunger case
- 52: attracting element
- 53: magnet coil
- 6: plunger
- 61: plunger spring
- 8: setting adjustment section
- 81: adjusting screw
- 3': valve member
- 33: valve body
- 33a: aperture (pressure equalizing path)
- 33d: tapered surface a
- 14: spring holding member
- 14a: through-hole (pressure equalizing path)
- 14b: sliding surface
- 15: helical compression spring
- L: axis line

## Claims

1. An electromagnetic control valve comprising:
a valve chamber and a valve port formed between a first port and a second port; and
an electromagnetically-driving section driving a valve body in the valve chamber to open or close the valve port,
wherein a force applied to the valve body due to a difference in pressure between the first port and the second port is cancelled by a force applied to the valve body due to a difference in pressure between the valve chamber and a pressure equalizing chamber which is added to a pressure sensing section,
an opening of the valve port varies in a proportional manner, depending on a balance between an electromagnetic force from the electromagnetically-driving section and a spring force of an adjusting spring,
the electromagnetically-driving section, the adjusting spring, the pressure equalizing chamber, and the pressure sensing section are disposed opposite the valve port on an axis line of the valve port with respect to the valve body therebetween, and
a pressure equalizing path that makes the valve port communicate with the pressure equalizing chamber is formed in a valve member having the valve body.

2. The electromagnetic control valve according to claim 1, wherein
the pressure sensing section is a flexible diaphragm that is disposed between the valve chamber and the pressure equalizing chamber and that is connected to the valve body.

3. The electromagnetic control valve according to claim 1 or 2, wherein
the electromagnetically-driving section includes: an attracting element that generates an electromagnetic force from feeding of current to a magnet coil; and an electromagnetically movable section that opposes the attracting element in a case and that is movable in an axial direction of the case with the electromagnetic force,
the valve member has a connecting section that is disposed and extends from the valve body toward the electromagnetically-driving section,
the adjusting spring is disposed in the attracting element,
an end portion of the connecting section passes through centers of the electromagnetically movable section and the attracting element and is connected to the adjusting spring, and
a helical compression spring that biases the valve body toward a valve-opening side is disposed in the valve port.

4. The electromagnetic control valve according to claim 3, wherein
a concave surface centered on the axis line is formed on a side of the valve body which faces the valve port,
a spring holding member is disposed at an end portion of the helical compression spring which faces the valve body, and
the spring holding member has a sliding surface that abuts on the concave surface of the valve body.

5. The electromagnetic control valve according to claim 4, wherein
the concave surface of the valve body is a tapered surface having a mortar shape centered on the axis line, and
the sliding surface of the spring holding member which has a spherical shape abuts on the tapered surface.
